# EUROPÄISCHE PATENTANMELDUNG

(11) **EP 4 678 084 A1**
(43) Veröffentlichungstag der Anmeldung: **14.01.2026**
(21) Anmeldenummer: 25186900.4
(22) Anmeldetag: 02.07.2025
(51) Int. Cl.: A47L 11/40, H02J 50/10, E04F 19/04, H02J 1/00

(54) **LEISTENANORDNUNG**

(30) Priorität: 11.07.2024 DE 102024119770
(71) Anmelder: Döllken Profiles GmbH, 59199 Bönen (DE)
(72) Erfinder: Ottow, Martin, 45134 Essen (DE); Menke, Oliver, 44879 Bochum (DE)
(74) Vertreter: Andrejewski - Honke Patent- und Rechtsanwälte Partnerschaft mbB

(57) **Zusammenfassung**

Die Erfindung betrifft eine Leistenanordnung (1), insbesondere Sockelleistenanordnung, mit zumindest einer Leiste (2) zur Befestigung an einem Übergang zwischen einer Wand (3) und einem Boden (4). Die Leistenanordnung (1) weist in oder an der Leiste (2) eine Ladeeinrichtung (5) zum Laden eines Energiespeichers eines Bodenreinigungsgerätes (6), insbesondere eines Saug- und/oder Wischroboters auf.

## Beschreibung

Die Erfindung betrifft eine Leistenanordnung, insbesondere eine Sockelleistenanordnung, mit zumindest einer Leiste zur Befestigung an einem Übergang zwischen einer Wand und einem Boden. Eine solche Leistenanordnung bzw. deren Leiste wird beispielsweise an einer Wand befestigt, z.B. durch Kleben, mittels Nägeln/Stiften und/oder Schrauben. Die Leistenanordnung kann eine oder mehrere sich in Leistenlängsrichtung erstreckende Leisten, bei denen es sich um Profile handelt, umfassen.

Solche Leisten sind aus dem Stand der Technik grundsätzlich bekannt. Aus der DE 20 2017 107 852 U1 kennt man eine Abschlussleiste bzw. Sockelleiste aus Kunststoff zur Montage an einem Übergang zwischen Boden und Wand. Die Leiste weist rückseitig einen Montagesteg auf, der unterschiedlich ausgebildet sein kann, wodurch sich im montierten Zustand zwischen der Leiste und der Wand offene Kammern bilden.

Weiterhin kennt man aus der DE 20 2007 014 686 U1 eine Profilleiste bzw. Sockelleiste, die als Verkleidungsprofil ausgebildet ist. Die Profilleiste kann an einem Übergang zwischen Boden und Wand verlegt werden und weist ein Grundprofil auf, auf das ein Verkleidungsprofil aufsteckbar ist. Das Verkleidungsprofil ist als Aufnahmeprofil für einen Verkleidungsstreifen ausgebildet, der beispielsweise über Clips auf dem Grundprofil angebracht werden kann.

Im Übrigen sind aus dem Stand der Technik Leisten mit Funktionskanälen bekannt. So beschreibt die DE 20 2012 101 292 U1 eine Leiste bzw. Sockelleiste mit einem Leistenkörper, der als Hohlprofil ausgebildet ist. Das Hohlprofil wiederum weist mindestens einen ersten und einen zweiten Funktionskanal auf, die über Abdeckprofile verschlossen sind. In den Funktionskanal können beispielsweise Kabel oder Leitungen verlegt werden, damit diese im Raum nicht sichtbar sind.

Unabhängig von den Leisten sind im Stand der Technik Haushaltsroboter wie beispielsweise Bodenreinigungsgeräte bekannt, die ihren Energiespeicher an zugehörigen Ladestationen aufladen. Aus der DE 20 2022 103 181 U1 ist eine Basisstation für ein Reinigungsgerät bekannt, die zwei Ladekontakte zum Aufladen eines Energiespeichers des Reinigungsgerätes aufweist.

Ebenso ist aus der DE 10 2019 126 886 A1 eine Ladestation für ein selbstfahrendes Bodenreinigungsgerät bekannt. Die Ladestation weist ein Gehäuse zur Aufnahme des selbstfahrenden Bodenreinigungsgerätes auf, wobei das Gehäuse eine Tür aufweist, die geöffnet wird, sodass das Bodenreinigungsgerät vollständig in das Gehäuse hereinfahren kann.

Ferner sind zur Verstauung von Staubsaugerrobotern weitere Robotergaragen wie in der DE 20 2019 005 026 U1 bekannt. Die dort beschriebene Robotergarage lässt sich in Einrichtungsgegenstände und Möbelstücke integrieren und besitzt einen automatischen Öffnungsmechanismus, um den Haushaltroboter in die Garage hereinzulassen. In die Robotergarage ist zudem eine Ladestation integriert.

Auch die DE 20 2019 100 850 U1 beschreibt ein solches Verstausystem für einen Bodenroboter, das in ein Möbelstück oder ein Gebäudeelement integriert ist und einen Aufnahmeraum zur vollständigen Aufnahme des Roboters aufweist. Das Verstausystem weist zudem eine Ladeeinrichtung auf, sodass der Bodenroboter in dem Aufnahmeraum geladen werden kann.

Im Übrigen wird in der DE 10 2016 208 037 A1 eine Leiste zur Wandmontage beschrieben, auf deren Rückseite elektrisch leitende Elemente vorgesehen sind. Die Vorderseite und/oder die Seitenfläche weisen Ausnehmungen auf, welche zur Aufnahme von Funktionssteckern und/oder Funktionsmodulen ausgebildet sind. Das Funktionsmodul kann Anschlüsse aufweisen, welche zumindest teilweise über Ausnehmungen von außerhalb der Leiste zugänglich und/oder sichtbar sind.

Eine Leiste mit integrierten Leitungen und elektrischen Komponenten ist auch aus der US 6 216 406 B1 bekannt. Es können z.B. Anschlüsse für Telekommunikationseinrichtungen oder Spannungsversorgungen vorgesehen sein.

Auch die CN 117513688 A offenbart die Möglichkeit, elektrische Komponenten und Leitungen in Sockelleisten einzusetzen.

Aus der DE 101 12 119 A1 kennt man außerdem eine Endlos-Leiste zur Aufnahme elektrischer Steckvorrichtungen, elektrischer Klemmleisten oder dergleichen, bestehend im Wesentlichen aus einer Haubenleiste, einer Bodenleiste und endseitigen Stirnplatten.

Weitere Ausführungsformen von Leistenanordnungen werden in der US 4 479 687 und der DE 10 2012 023 859 A1 behandelt.

Schließlich beschreibt die DE 10 2016 115 288 A1 eine Ladestation für ein Reinigungsgerät, mit einem Stationsgehäuse, einem Netzanschlusselement, insbesondere einem Netzstecker, zum Anschließen der Ladestation an eine elektrische Spannungsversorgung, einer Ladeeinrichtung und mindestens einem Ladeelement zur Übertragung von Energie auf einen Akkumulator. Die Ladestation hängt mit ihrem Gewicht an z.B. einer Wandsteckdose. Die Ladeelemente der Ladestation dienen zum Anschluss an korrespondierende Ladeelemente des Reinigungsgerätes, um einen Akkumulator des Reinigungsgerätes zu laden.

In der Praxis werden Bodenreinigungsgeräte, insbesondere Saug- und/oder Wischroboter, die z.B. im Privathaushalt eingesetzt werden, an einer gerätespezifischen Ladestation geladen. Diese Ladestation steht als separates Gerät im Raum und unterbricht dadurch das ästhetische Raumbild. Außerdem muss ein deutlich größerer Platzbedarf als der der eigentlichen Ladestation zur Verfügung gestellt werden, damit das Bodenreinigungsgerät optimal an die Ladestation andocken kann. Auch die Varianten in Form von den bekannten Robotergaragen sind aufgrund des verhältnismäßig großen Platzbedarfs wenig zufriedenstellend.

Ausgehend von dem bekannten Stand der Technik liegt der Erfindung die Aufgabe zugrunde, eine Leistenanordnung der eingangs beschriebenen Art zu schaffen, die eine erweiterte Funktionalität aufweist. Insbesondere soll mithilfe die Leistenanordnung die Optik eines Raumes (bei Benutzung eines Bodenreinigungsgerätes) verbessert werden.

Diese Aufgabe wird erfindungsgemäß dadurch gelöst, dass die Leistenanordnung in oder an der Leiste eine Ladeeinrichtung zum Laden eines Energiespeichers eines Bodenreinigungsgerätes, insbesondere eines Saug- und/oder Wischroboters, aufweist.

Die Erfindung geht dabei von der Erkenntnis aus, dass sich die Funktionalität einer Leiste durch Kombination mit einer Ladeeinrichtung für bekannte Bodenreinigungsgeräte erweitern lässt. Die erfindungsgemäße Leistenanordnung übernimmt folglich nicht nur die Funktion einer Verkleidung des Wand-Boden-Übergangs, sondern zusätzlich die Funktion einer Ladestation für ein Bodenreinigungsgerät. Dadurch lässt sich die Optik eines Raumes verbessern, da keine separaten, störenden Ladeeinrichtungen platziert werden müssen. Diese sind nicht nur unansehnlich und unterbrechen die Raumästhetik, sondern haben auch einen entsprechenden Platzbedarf, der für die Nutzung der Raumfläche nicht mehr zur Verfügung steht. Die ohnehin vorhandene Leistenanordnung am Übergang zwischen Wand und Boden wird somit derart weiterentwickelt, dass sie die zusätzliche Funktion einer Ladeeinrichtung für ein Bodenreinigungsgerät erfüllt. Dabei wird die Leiste, die die Ladeeinrichtung aufnimmt, bevorzugt derart ausgebildet, dass sie optisch mit den übrigen Leisten des Raumes eine Einheit bildet.

Bevorzugt weist die Leiste einen Grundkörper auf, in oder an dem die Ladeeinrichtung integriert oder angeordnet ist. Der Grundkörper kann im Querschnitt eine (im Wesentlichen) rechteckige Form aufweisen, die Erfindung ist aber nicht auf eine solche Geometrie beschränkt. Der Grundkörper kann daher auch schräge, gekrümmte oder abgerundete Flächen aufweisen. Die Form des Grundkörpers wird genutzt, um die Ladeeinrichtung an oder in der Leiste anzuordnen, sodass die Ladeeinrichtung ein Teil der Leistenanordnung ist und nicht separat in dem Raum angeordnet werden muss.

In einer bevorzugten Weiterbildung ist der Grundkörper der Leiste als Hohlprofil mit einem Innenraum ausgebildet und die Ladeeinrichtung ist in dem Innenraum des Hohlprofils angeordnet. Der Grundkörper, der beispielsweise eine (im Wesentlichen) rechteckige Form aufweisen kann, ist somit derart konzipiert, dass er einen Hohlraum aufweist, der dazu geeignet ist, die Ladeeinrichtung vollständig aufzunehmen. Somit verschwindet die Ladeeinrichtung aus der Optik des Raumes und wird in der Leiste versteckt. Dies hat den Vorteil, dass man den an bzw. hinter der Rückseite der Leiste vorhandenen Platz durch die Ausbildung eines Hohlraums für die Aufnahme der Ladeeinrichtung ausnutzt. Die Anordnung der Ladeeinrichtung in oder an dem Grundkörper der Leiste erfordert somit keine räumliche Versetzung der Leistenanordnung, da diese in die Leiste integriert wird. Der Hohlraum ist in seiner Geometrie und Größe derart ausgebildet, dass er geeignet ist, die Ladeeinrichtung, die unter anderem eine entsprechende Elektrik mit den benötigten Anschlüssen und eine geeignete Steuereinrichtung aufweist, aufzunehmen, insbesondere zur kontaktlosen Energieübertragung, z.B. durch Induktion. Dabei kann der Hohlraum selbst unterschiedliche Geometrien und Abmessungen aufweisen, die entsprechend auch an die Form bzw. Ausbildung der Leiste angepasst sind.

Der Grundkörper der Leiste weist bevorzugt ein frontseitiges Abdeckprofil auf, das eine vordere Sichtseite bildet, wobei die Ladeeinrichtung bevorzugt hinter dem Abdeckprofil angeordnet ist. Die vordere Sichtseite meint die im montierten Zustand dem Raum zugewandte Seite der Leiste, die die Optik des Raumes maßgeblich beeinflusst. Das Abdeckprofil dient somit dazu, den rückseitigen Bereich der Leiste zu verdecken, damit sich die Ladeeinrichtung verstecken lässt. Außerdem kann das Abdeckprofil unterschiedliche Gestaltungen, Farben oder Dekore aufweisen. Durch das frontseitige Abdeckprofil wird die Ladeeinrichtung derart verdeckt, dass diese vom Raum aus nicht sichtbar ist.

In einer möglichen Ausgestaltung ist die Leistenanordnung derart ausgebildet, dass zumindest das frontseitige Abdeckprofil nach vorne aufklappbar ist. Somit lässt sich das Abdeckprofil öffnen und legt dadurch die Ladeeinrichtung frei. Das Abdeckprofil klappt in den Raum hinein auf und liegt danach mit der rückseitigen Fläche nach oben gerichtet auf dem Boden vor der Leiste. Der Aufklappvorgang kann durch Lösen einer Clipverbindung erfolgen. Es ist auch denkbar, dass das Abdeckprofil beim Schließen gegen eine Federbeaufschlagung gedrückt wird und das Abdeckprofil in der Schließstellung beispielsweise einrastet und gehalten wird, wobei beim Öffnen des Abdeckprofils dieses durch die Federkraft und/oder die Schwerkraft nach unten gedrückt wird.

Es ist bevorzugt vorgesehen, dass auf der Rückseite des aufklappbaren Abdeckprofils des Grundkörpers zumindest ein Ladekontakt vorhanden ist, bevorzugt zwei Ladekontakte vorhanden sind und dass das aufgeklappte Abdeckprofil von dem Bodenreinigungsgerät befahrbar ist. An der Rückseite sind beispielsweise metallische Kontakte bzw. Schleifkontakte angebracht, die dem Ladevorgang des Bodenreinigungsgerätes dienen. Dadurch, dass das Abdeckprofil nach unten aufklappt und somit flach auf dem Boden liegt, bildet dieses einen Untergrund, der von einem Bodenreinigungsgerät problemlos befahren oder überfahren werden kann. Der oder die Ladekontakte sind im montierten Zustand rückseitig des Abdeckprofils angebracht und befinden sich somit im aufgeklappten bzw. geöffneten Zustand auf der nach oben, d.h. zur Raumdecke hin, sichtbaren Fläche des Abdeckprofils. Das Bodenreinigungsgerät wiederum weist ebenfalls einen oder mehrere Ladekontakte auf, die auch beispielsweise als Metall- bzw. Schleifkontakte ausgebildet sind. Sobald das Bodenreinigungsgerät das aufgeklappte Abdeckprofil befährt, stehen die Ladekontakte der Ladeeinrichtung mit den Ladekontakten des Bodenreinigungsgerätes berührend in Verbindung und der Ladevorgang des Energiespeichers des Bodenreinigungsgerätes beginnt. Diese Ausgestaltung der Leiste bietet den Vorteil, dass diese z.B. für herkömmliche Bodenreinigungsgeräte, z.B. Saug- und oder Wischroboter geeignet ist, die bevorzugt über solche Ladekontakte und somit berührend aufgeladen werden.

In einer weiteren bevorzugten Ausführungsform kann der Ladevorgang des Energiespeichers des Bodenreinigungsgerätes berührungslos mittels kontaktloser Energieübertragung erfolgen, z.B. induktiv. Dazu ist es nicht notwendig, dass die Ladeeinrichtung beispielsweise metallische Ladekontakte aufweist, die mit entsprechenden Ladekontakten des Bodenreinigungsgerätes in Berührung sind. Daher ist es auch nicht notwendig, dass das Abdeckprofil des Grundkörpers der Leiste aufklappt und solche Ladekontakte freilegt. Die Ladeeinrichtung zur berührungslosen Energieübertragung, das bedeutet einem kontaktlosen Aufladen, befindet sich z.B. innerhalb des Hohlprofils und/oder rückseitig des Abdeckprofils an der Leiste und z.B. in dem Hohlraum bzw. Innenraum des Grundkörpers. Das Bodenreinigungsgerät fährt an die Leiste heran und stoppt im Bereich der Ladeeinrichtung und/oder dockt an die Leiste an, ohne dass eine berührende Kontaktierung erfolgt, sondern der Energiespeicher lädt sich an der Leiste induktiv auf. Darüber hinaus ist es auch denkbar, dass ein oder mehrere Bereiche der Leiste mit einer Ladeeinrichtung ausgestattet sind, die Energie bereitstellen, die das Bodenreinigungsgerät im Vorbeifahren zur Aufladung nutzen kann. In dieser Ausführungsform muss das Bodenreinigungsgerät somit nicht an die Leiste heranfahren und gegebenenfalls nicht einmal anhalten, um den Ladevorgang durchzuführen.

Alternativ kann auch das aufklappbare Abdeckprofil für die kontaktlose Energieübertragung ausgebildet sein und z.B. eine Induktionsspule aufweisen oder freilegen. Dies bietet den Vorteil, dass auch Bodenreinigungsgeräte aufgeladen werden können, die für einen induktiven Ladevorgang im Bodenbereich des Gerätes ausgebildet sind. In dieser Ausgestaltungsform ist die Ladeeinrichtung für die kontaktlose Energieübertragung z.B. in dem Abdeckprofil oder an der Rückseite des Abdeckprofils angeordnet. Sobald das Abdeckprofil nach vorne aufklappt und auf dem Boden des Raumes liegt, kann das Bodenreinigungsgerät auf das Abdeckprofil auffahren und kontaktlos aufgeladen werden, z.B. mittels Induktion.

Bevorzugt weist die Ladeeinrichtung eine erste Steuereinrichtung auf, die mit einer zweiten Steuereinrichtung des Bodenreinigungsgerätes kommunizieren kann. Sowohl die an oder in die Leiste integrierte Ladeeinrichtung als auch das Bodenreinigungsgerät verfügen somit über eine eigene Steuereinrichtung, die jeweils geeignet sind, Daten zu senden und auch zu verarbeiten, um den Ladevorgang zu ermöglichen bzw. zu vereinfachen.

Dabei ist es bevorzugt möglich, dass die Steuereinrichtung der Ladeeinrichtung ein Positionssignal aussendet, das von der Steuereinrichtung des Bodenreinigungsgerätes verarbeitet wird, z.B. zum positionierten Andocken an die Leiste für den Ladevorgang. Die Ladeeinrichtung ist somit in der Lage, derart mit dem Bodenreinigungsgerät zu kommunizieren, dass sie Daten über ihre genaue Position übermittelt, die von der Steuereinrichtung des Bodenreinigungsgerätes aufgenommen und verarbeitet werden können. Dies ermöglicht es dem Bodenreinigungsgerät, an die für den Ladevorgang erforderliche Position, d.h. den Bereich der Leiste, hinter dem sich die Ladeeinrichtung befindet, zu fahren und die Energieübertragung zur Aufladung des Energiespeichers durchzuführen. Sobald der Energiespeicher nahezu entleert ist, erkennt das Bodenreinigungsgerät, dass es zum Ladevorgang an die Ladeeinrichtung fahren muss. Das Bodenreinigungsgerät kann eine Abfrage an die Ladeeinrichtung starten, die dann ein Positionssignal aussendet, damit das Bodenreinigungsgerät positioniert an die Leiste andocken kann. Es ist jedoch auch möglich, dass in der Steuereinrichtung des Bodenreinigungsgerätes die Position der Ladeeinrichtung in der Leiste programmiert wird, sodass das Bodenreinigungsgerät zum Ladevorgang an die ihm entsprechend bekannte Position fährt. Eine solche Programmierung der Position ist bei herkömmlich eingesetzten Bodenreinigungsgeräten hinreichend bekannt.

Weiterhin ist es im Rahmen der Erfindung möglich, dass die Steuereinrichtung des Bodenreinigungsgerätes ein Erkennungssignal aussendet, das von der Steuereinrichtung der Ladeeinrichtung verarbeitet wird, z.B. zur Identifizierung des sich nähernden Bodenreinigungsgerätes und/oder zum Aufklappen des Abdeckprofils. Es ist somit auch möglich, dass das Bodenreinigungsgerät mit der Ladeeinrichtung derart kommuniziert, das die Ladeeinrichtung erkennt, dass das Bodenreinigungsgerät auf dem Weg zur Ladeeinrichtung ist, um den Energiespeicher aufzuladen. Dies ermöglicht z.B., dass das frontseitige Abdeckprofil frühzeitig nach vorne aufgeklappt wird, sodass dieses von dem Bodenreinigungsgerät befahrbar ist.

**In** einer Ausgestaltungsform kann die Leiste optional einen Antrieb zum Öffnen und/oder Schließen des aufklappbaren Abdeckprofils des Grundkörpers aufweisen. Dabei kann es sich beispielsweise um einen motorischen Antrieb handeln. Sobald die Steuereinrichtung der Ladeeinrichtung erkennt, dass das Bodenreinigungsgerät an die Leiste heranfährt, wird der Antrieb betätigt, um das Abdeckprofil zu öffnen und den Ladevorgang zu ermöglichen. Sobald der Energiespeicher des Bodenreinigungsgerätes wieder vollständig aufgeladen ist und/oder das Bodenreinigungsgerät wieder aus der Ladeposition wegfährt, kann das Abdeckprofil über den Antrieb geschlossen werden, sodass weder der Reinigungsvorgang im Bereich vor der Leiste, noch die Optik des Raumes durch das geöffnete Profil beeinträchtigt werden.

Bei der Leiste, die mit der Ladeeinrichtung ausgerüstet ist, handelt es sich z.B. um einen Leistenabschnitt mit begrenzter Länge, der mit weiteren Leisten kombiniert werden kann. Dabei wird dieser Leistenabschnitt an die Optik der übrigen Leisten, z.B. herkömmlicher Leisten angepasst, sodass sich ein einheitliches optisches Gesamtbild ergibt.

Die Erfindung betrifft folglich auch eine Leistenanordnung, die zusätzlich zu der (ersten) Leiste, in oder an welcher die Ladeeinrichtung angeordnet ist, eine oder mehrere weitere (zweite) Leisten aufweist, die ohne Ladeeinrichtung bzw. ohne Ladeeinrichtungen ausgebildet sind. Bei diesen weiteren (zweiten) Leisten kann es sich um herkömmliche Leisten handeln. Bevorzugt weisen die (erste) Leiste und die weiteren (zweiten) Leisten das gleiche optische Erscheinungsbild auf, und zwar bevorzugt jeweils Sichtseiten mit dem gleichen optischen Erscheinungsbild und besonders bevorzugt mit dem gleichen Dekor. So können die Leisten mit dem gleichen vorderen Abdeckprofil ausgestattet sein. Es liegt auch im Rahmen der Erfindung, dass die erste Leiste, welche mit der Ladeeinrichtung eine Funktionsleiste bildet, und die (herkömmlichen) weiteren Leisten dieselbe Profilform und folglich denselben oder im Wesentlichen denselben Leistenquerschnitt aufweisen.

In einer bevorzugten Ausführungsform kann die Leiste an der oberen Seite des Grundkörpers ein oberes Abschlussprofil, z.B. ein Wandabschlussprofil und/oder an der unteren Seite des Grundkörpers ein unteres Abschlussprofil, z.B. ein Bodenabschlussprofil, aufweisen. Das Abschlussprofil ist bevorzugt durch Extrusion hergestellt, bevorzugt durch Koextrusion. Sofern für das Abschlussprofil ein anderes Material als das des Grundkörpers der Leiste genutzt wird, erfolgt die Herstellung durch eine Koextrusion, z.B. eine Zweifachextrusion. Das Abschlussprofil kann auch mehrere unterschiedliche Bereiche aufweisen, z.B. eine weichere Spitze aus einem im Vergleich zu dem Abschlussprofil elastischerem Material. Die Herstellung erfolgt in diesem Fall im Zuge einer Mehrfachextrusion, z.B. einer Dreifachextrusion.

Bevorzugt ist die Leiste, z.B. der Grundkörper und/oder das obere Abschlussprofil und/oder das untere Abschlussprofil der Leiste aus zumindest einem thermoplastischen Kunststoff hergestellt, z.B. Polypropylen (PP), Polyvinylchlorid (PVC), Polystyrol (PS) oder andere technische Thermoplaste. Die Leiste kann einstückig hergestellt werden, z. B. durch Kunststoff-Extrusion. Alternativ kann auch ABS (Acrylnitril-Butadien-Styrol) zum Einsatz kommen. Optional besteht zudem die Möglichkeit, die Leiste aus einem geschäumten Kunststoff, beispielsweise durch Zugabe eines Treibmittels, herzustellen.

Weiterführend kann die Leiste, z.B. der Grundkörper und/oder das obere Abschlussprofil und/oder untere Abschlussprofil der Leiste ein Biopolymer umfassen, z.B. ein Polyactid. Durch die Verwendung von nachwachsenden Rohstoffen können die fossilen Ressourcen geschont werden. Darüber hinaus ist es auch möglich, Kunststoff-Recyclate für die Herstellung der Leiste einzusetzen, um somit Kunststoffe wiederzuverwerten und ebenfalls Ressourcen zu schonen.

Bevorzugt ist die Leiste, z.B. der Grundkörper und das obere Abschlussprofil und/oder untere Abschlussprofil einstückig durch Extrusion hergestellt, vorzugsweise durch Koextrusion. Im Zuge der Extrusion können das Abschlussprofil bzw. mehrere Abschlussprofile aus dem gleichen Werkstoff wie der Grundkörper der Leiste hergestellt werden und an dieser angeordnet werden, z.B. durch eine Einfachextrusion. Es ist jedoch auch möglich, im Rahmen der Erfindung die Abschlussprofile durch eine Koextrusion zu erzeugen, sodass das Abschlussprofil aus einem anderen Material extrudiert wird als der Grundkörper der Leiste. Ferner kann auch im Zuge einer Mehrfachextrusion das Abschlussprofil selbst aus unterschiedlichen Materialien extrudiert werden, z.B. mit einer elastischen Spitze bzw. Dichtlippe aus einem weicheren Material als das Material des übrigen Abschlussprofils.

Im Folgenden wird die Erfindung anhand von lediglich Ausführungsbeispiele darstellenden Zeichnungen näher erläutert. Es zeigen:
- Fig. 1: eine erste Ausführungsform der Leistenanordnung zur kontaktlosen Energieübertragung,
- Fig. 2: eine Ausführungsform einer Leiste gemäß Fig. 1,
- Fig. 3: eine Ausführungsform einer Leiste gemäß Fig. 1,
- Fig. 4: eine zweite Ausführungsform der Leistenanordnung zur berührenden Energieübertragung über Ladekontakte und
- Fig. 5: eine Ausführungsform einer Leiste gemäß Fig. 4.

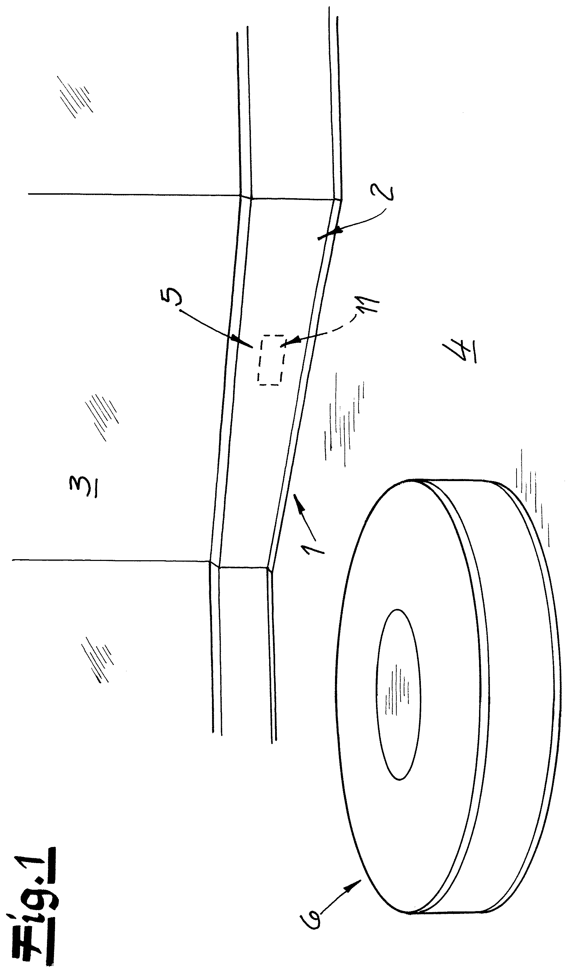

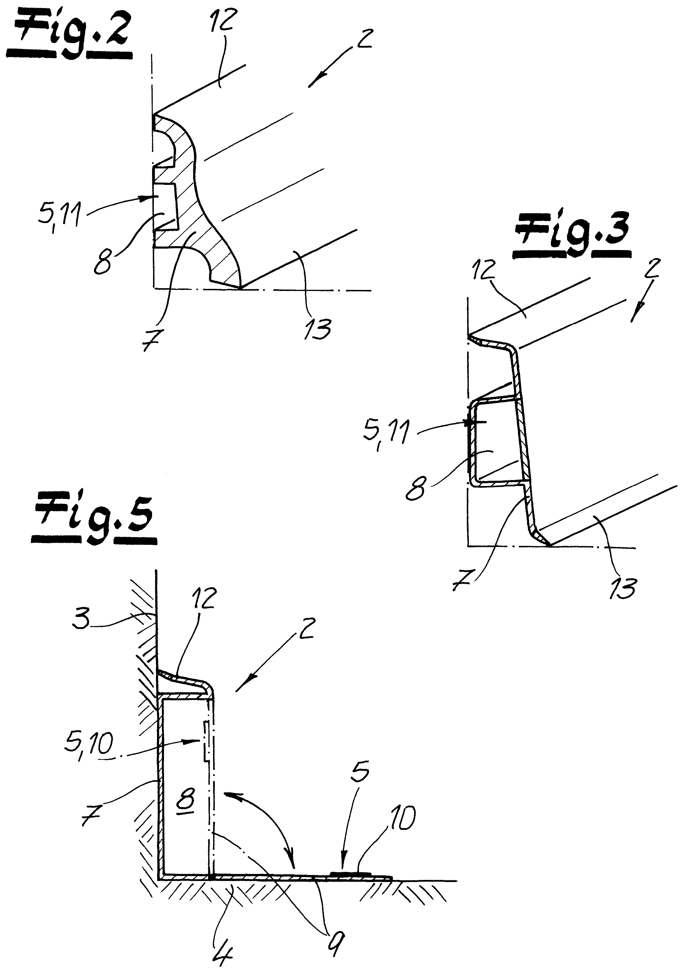

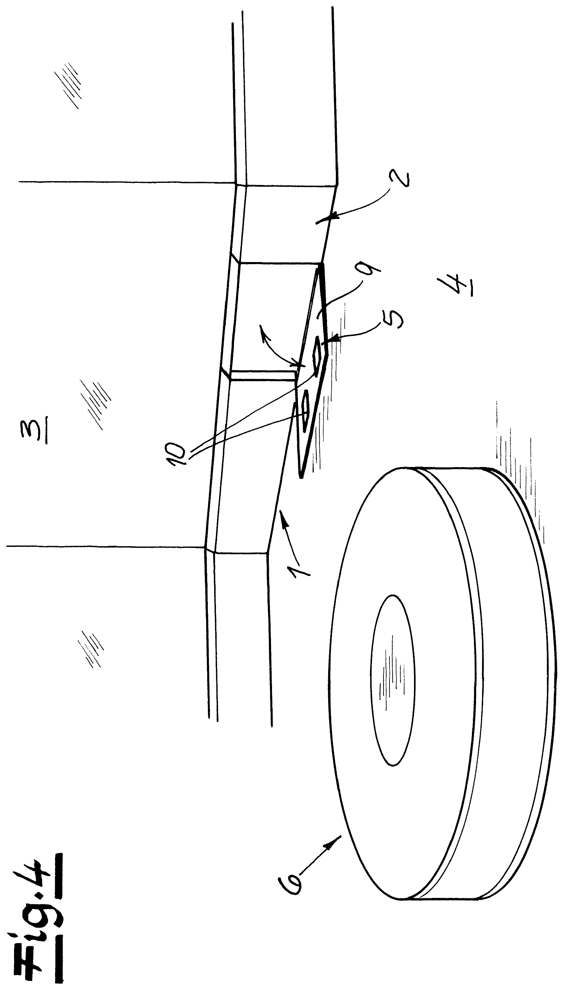

In den Figuren sind beispielhaft Ausführungsformen einer erfindungsgemäßen Leistenanordnung dargestellt. Dabei handelt es sich insbesondere um Sockelleistenanordnungen. Die Ausführungen in den Figuren 1 und 4 zeigen jeweils unterschiedliche Ausbildungen der Leistenanordnung, die für unterschiedlich ausgebildete Bodenreinigungsgeräte ausgestaltet sind. Die Figuren 2, 3 und 5 zeigen unterschiedlich ausgebildete Leisten, die für die unterschiedlichen Leistenanordnungen geeignet sind. Der grundsätzliche, konstruktive Aufbau dieser Leisten ist bekannt.

In der Fig. 1 ist eine erste Ausführungsform der Leistenanordnung 1 dargestellt. Diese zeigt die Variante der kontaktlosen Energieübertragung 11. Gezeigt ist die Leistenanordnung 1 mit der Leiste 2, die am Übergang zwischen einer Wand 3 und einem Boden 4 angeordnet ist. Ebenfalls dargestellt ist beispielhaft ein elektrisches Bodenreinigungsgerät 6, z.B. ein Saug- und/oder Wischroboter, der auf dem Boden 4 umherfährt und den Boden 4 dabei reinigt. Das Bodenreinigungsgerät 6 weist einen Energiespeicher auf, der sich während des Betriebes entlädt. Um diesen Energiespeicher wieder aufzuladen, wird eine Ladeeinrichtung 5 benötigt, die erfindungsgemäß in oder an der Leiste angeordnet ist. Gemäß Fig. 1 kann der Ladevorgang des Energiespeichers berührungslos mittels kontaktloser Energieübertragung 11 erfolgen, z.B. induktiv. Daher ist die Ladeeinrichtung 5 in dem Raum nicht sichtbar, sondern befindet sich hinter oder in der Leiste 2. Die Leiste 2 selbst besitzt einen Grundkörper 7. Dieser kann gemäß Fig. 3 als Hohlprofil mit einem Innenraum 8 ausgebildet sein, wobei die Ladeeinrichtung 5 zur Übertragung der für den Aufladevorgang benötigten Energie mit samt der benötigten elektrischen Anschlüsse in diesem Innenraum 8 bzw. hinter einem Abdeckprofil 9 der Leiste 2 angeordnet ist. Alternativ kann der Grundkörper 7 gemäß Fig. 2 auch derart ausgebildet sein, dass er kein Hohlprofil aufweist, sondern als einfaches Abdeckprofil 9 die sich hinter der Leiste 2 befindliche elektrische Ladeeinrichtung 5 abdeckt bzw. überdeckt, sodass diese optisch hinter dem Abdeckprofil 9 und somit der Leiste 2 verschwindet. Der Grundkörper 7 wird somit im Wesentlichen von dem Abdeckprofil 9 gebildet. Das Bodenreinigungsgerät 6 fährt für die Durchführung des Ladevorgangs an die Leistenanordnung 1 bzw. Leiste 2 heran und stoppt im Bereich der Ladeeinrichtung 5. Über beispielsweise Induktion wird der Energiespeicher des Bodenreinigungsgeräts 6 aufgeladen und der Saug- und/oder Wischroboter kann im Anschluss erneut zur Reinigung genutzt werden. Damit das Bodenreinigungsgerät 6 die korrekte Position an der Leistenanordnung 1 findet, verfügt es über eine Steuereinrichtung. Diese kann derart programmiert werden, dass das Bodenreinigungsgerät 6 die Position für den Ladevorgang kennt und bei Bedarf automatisch an diese heranfährt. Alternativ kann auch die Ladeeinrichtung 5 eine Steuereinrichtung aufweisen, die in der Lage ist, mit der Steuereinrichtung des Bodenreinigungsgerätes 6 zu kommunizieren. Die Ladeeinrichtung 5 ist somit geeignet, ein Positionssignal an das Bodenreinigungsgerät 6 zu senden, welches dieses Signal wiederum derart verarbeiten kann, dass es die korrekte Position für den Ladevorgang auffindet.

Die Figuren 2 und 3 zeigen zwei Ausführungsformen einer Leiste 2, die besonders für die Leistenanordnung 1 gemäß Fig. 1 geeignet sind. Die Fig. 2 zeigt ein Leistenprofil mit einem Grundkörper 7, wobei der Grundkörper 7 im Wesentlichen von dem Abdeckprofil 9 gebildet wird. Dieses entspricht einer allgemein bekannten Ausbildungsform solcher Leisten. An den Grundkörper 7 sind Abschlussprofile 12, 13 angeformt. Das obere Abschlussprofil 12 dient als Wandabschlussprofil und legt sich entsprechend an die Wand an. Das untere Abschlussprofil 13 hingegen dient als Bodenabschlussprofil am Übergang zum Boden. Der Grundkörper 7 der Leiste 2 kann aus einem Kunststoff hergestellt sein. Dabei handelt es sich vor allem um einen thermoplastischen Kunststoff, z.B. PP, PVC, PS oder andere technische Thermoplaste. Außerdem kann dieser ein Biopolymer wie z.B. Polyactid umfassen. Der Grundkörper 7 wird bevorzugt im Zuge der Extrusion hergestellt. Die Abschlussprofile 12, 13 können aus dem identischen Material wie das des Grundkörpers 7 hergestellt sein. Dazu werden der Grundkörper 7 sowie die Abschlussprofile 12, 13 einstückig durch Extrusion hergestellt. Die Abschlussprofile 12, 13 können aber auch ein abweichendes Material umfassen, sodass die Fertigung von Grundkörper 7 und Abschlussprofilen 12, 13 durch Koextrusion erfolgt, z.B. Zweifachextrusion. Der Grundkörper 7 gemäß Fig. 2 weist im Querschnitt Stege auf, die auf der Rückseite der Leiste 2 in Kombination mit der Wand 3 einen Innenraum 8 formen. Dieser Innenraum 8 ist geeignet, die Ladeeinrichtung 5 zur kontaktlosen Energieübertragung 11 aufzunehmen. Somit dient die Leiste gemäß Fig. 2 der Abdeckung der Ladeeinrichtung 5, sodass diese im Raum nicht sichtbar ist.

Eine zweite Ausführungsform einer Leiste 2 ist in der Fig. 3 dargestellt. Diese Leiste 2 weist einen Grundkörper 7 auf, der als Hohlprofil mit einem Innenraum 8 ausgebildet ist. In diesem Innenraum 8 kann die Ladeeinrichtung 5 zur kontaktlosen Energieübertragung 11 angeordnet sein, sodass die Ladeeinrichtung 5 optisch versteckt ist. Die Leiste 2 weist ebenfalls ein oberes Abschlussprofil 12 sowie ein unteres Abschlussprofil 13 auf, die entsprechend den Übergang zu der Wand 3 bzw. zu dem Boden 4 abschließen. Auch die Leiste 2 der Fig. 3 besteht aus einem thermoplastischen Kunststoff und wird durch Extrusion gefertigt. Der Grundkörper 7 der Leiste 2 und die Abschlussprofile 12, 13 können einstückig durch Extrusion gefertigt sein und aus demselben Material bestehen oder aus verschiedenen Materialien bestehen und im Zuge einer Koextrusion, z.B. einer Zweifachextrusion, gefertigt sein. Alternativ kann der Grundkörper auch mehrteilig ausgebildet sein und ein abnehmbares Abdeckprofil 9 aufweisen. Der Innenraum 8 kann in dieser Ausgestaltung auch für andere Zwecke genutzt werden, z.B. zum Verlegen von Kabeln, d.h. als Kabel- und/oder Funktionskanal. Zwar ist dies in dem Ausführungsbeispiel gemäß Fig. 3 nicht dargestellt, dennoch können das obere und/oder das untere Abschlussprofil 12, 13 eine Spitze aufweisen, die aus einem flexibleren, weicheren Material besteht. Diese Spitze wird auch als (Dicht-)Lippe bezeichnet und kann aus einem flexiblen Kunststoff hergestellt sein, z.B. TPE-S, Weich-PVC oder TPU oder aber auch aus thermoplastischen Weichmaterialien wie TPO, TPE-E oder TPE-V. Die flexiblen Spitzen sind einstückig an das Abschlussprofil 12, 13 angeformt, bevorzugt durch Koextrusion.

In der Fig. 4 ist eine zweite Ausführungsform der Leistenanordnung 1 dargestellt, die zur berührenden Energieübertragung über Ladekontakte 10 dient. Dargestellt ist die Leistenanordnung 1 mit der Leiste 2, die am Übergang zwischen der Wand 3 und dem Boden 4 angeordnet ist. Die Leiste 2 bzw. der Grundkörper 7 der Leiste 2 weist ein frontseitiges Abschlussprofil 9 auf, das eine vordere Sichtseite bildet. Im montierten und geschlossenen Zustand befindet sich diese auf der dem Raum zugewandten Seite der Leiste 2. Die Ladeeinrichtung 5 ist hinter dem Abdeckprofil 9 angeordnet, sodass diese im geschlossenen Zustand im Raum nicht sichtbar ist. Das frontseitige Abdeckprofil 9 ist nach vorne, d. h. in den Raum hinein aufklappbar. Im aufgeklappten Zustand liegt dieses Profil auf dem Boden 4, sodass die Rückseite des Abdeckprofils 9 nach oben hin sichtbar ist. Auf dieser Rückseite des Abdeckprofils 9 befinden sich zwei Ladekontakte 10. Das aufgeklappte Abdeckprofil 9 ist von dem Bodenreinigungsgerät 6 befahrbar. Sofern der Energiespeicher des Bodenreinigungsgerätes 6 aufgeladen werden muss, fährt das Bodenreinigungsgerät, z.B. ein Saug- und/oder Wischroboter, an die Leiste 2 heran. Sowohl das Bodenreinigungsgerät 6 als auch die Ladeeinrichtung 5 verfügen über eine Steuereinrichtung. Die beiden Steuereinrichtungen sind geeignet, miteinander zu kommunizieren, sodass die Steuereinrichtung des Bodenreinigungsgerätes 6 für einen anstehenden Ladevorgang an die Leiste 2 heranfährt und in der Lage ist, dabei ein Erkennungssignal auszusenden. Dieses wird von der Steuereinrichtung der Ladeeinrichtung 5 verarbeitet, sodass diese das Bodenreinigungsgerät 6, das sich ihr nähert, identifizieren kann und für einen reibungslosen Ladevorgang das Abdeckprofil 9 frühzeitig aufklappen kann. Das Bodenreinigungsgerät 6 fährt dann auf das aufgeklappte Abdeckprofil 9 auf und die Ladekontakte, z.B. Metall- bzw. Schleifkontakte des Bodenreinigungsgerätes 6 stehen berührend in Kontakt mit den Ladekontakten 10 der Ladeeinrichtung. Sobald diese Verbindung besteht, startet der Ladevorgang. Das Abdeckprofil 9 kann beispielsweise durch einen Antrieb geöffnet und/oder geschlossen werden.

Die Fig. 5 zeigt eine Ausführungsform einer Leiste 2, die Bestandteil der Leistenanordnung 1 nach Fig. 4 sein kann. Die Leiste 2 weist einen

Grundkörper 7 auf. Außerdem sind an dem Grundkörper 7 Abschlussprofile 12, 13, ein oberes Abschlussprofil 12 und ein unteres Abschlussprofil 13 angeordnet. Der Grundkörper 7 und die Abschlussprofile 12, 13 können aus einem thermoplastischen Kunststoff bestehen, z.B. PP, PVC, PS oder andere technische Thermoplaste und durch Extrusion hergestellt werden. Denkbar ist auch, dass der Grundkörper 7 und die Abschlussprofile 12, 13 aus unterschiedlichen Materialien bestehen und durch Koextrusion gefertigt werden. Optional können die Abschlussprofile 12, 13 am oberen bzw. unteren Ende eine weichelastische (Dicht-)Lippe aufweisen, die einstückig angeformt ist, bevorzugt durch Koextrusion. Der Grundkörper 7 weist ein vorderes Abdeckprofil 9 auf, das auf der Rückseite Ladekontakte 10 besitzt und aufklappbar ist. Im aufgeklappten Zustand liegt das Abdeckprofil 9 auf dem Boden 4 und die Rückseite mit den Ladekontakten 10 ist nach oben gerichtet. Die Ladekontakte 10 bilden die Ladeeinrichtung 5, die im geschlossenen Zustand in einem Innenraum 8 zwischen Grundkörper 7 und Abdeckprofil 9 angeordnet ist. Sobald das Abdeckprofil 9 aufgeklappt ist, ist dieses von einem Bodenreinigungsgerät 6 befahrbar, sodass der Energiespeicher dieses Bodenreinigungsgerätes 6 aufgeladen werden kann. Alternativ kann auch der Grundkörper 7 gemäß der Ausführungsform nach Fig. 5 als Hohlkörper mit einem Innenraum 8 ausgebildet sein. Auch in dieser Ausgestaltung ist ein Teil des Grundkörpers 7 als aufklappbares Abdeckprofil 9 ausgebildet.

## Patentansprüche

1. Leistenanordnung (1), insbesondere Sockelleistenanordnung, mit zumindest einer Leiste (2) zur Befestigung an einem Übergang zwischen einer Wand (3) und einem Boden (4), **dadurch gekennzeichnet, dass** die Leistenanordnung (1) in oder an der Leiste (2) eine Ladeeinrichtung (5) zum Laden eines Energiespeichers eines Bodenreinigungsgerätes (6), insbesondere eines Saug- und/oder Wischroboters, aufweist.

2. Leistenanordnung (1) nach Anspruch 1, **dadurch gekennzeichnet, dass** die Leiste (2) einen Grundkörper (7) aufweist, in oder an dem die Ladeeinrichtung (5) integriert oder angeordnet ist.

3. Leistenanordnung (1) nach Anspruch 2, **dadurch gekennzeichnet, dass** der Grundkörper (7) der Leiste (2) als Hohlprofil mit einem Innenraum (8) ausgebildet ist und dass die Ladeeinrichtung (5) in dem Innenraum (8) des Hohlprofils angeordnet ist.

4. Leistenanordnung (1) nach Anspruch 2 oder 3, **dadurch gekennzeichnet, dass** der Grundkörper (7) der Leiste (2) ein frontseitiges Abdeckprofil (9) aufweist, das eine vordere Sichtseite bildet, wobei die Ladeeinrichtung (5) bevorzugt hinter dem Abdeckprofil (9) angeordnet ist.

5. Leistenanordnung (1) nach Anspruch 4, **dadurch gekennzeichnet, dass** zumindest das frontseitige Abdeckprofil (9) nach vorne aufklappbar ist.

6. Leistenanordnung (1) nach Anspruch 4 oder 5, **dadurch gekennzeichnet, dass** auf der Rückseite des aufklappbaren Abdeckprofils (9) des Grundkörpers (7) zumindest ein Ladekontakt (10) vorhanden ist, bevorzugt zwei Ladekontakte (10) vorhanden sind und dass das aufgeklappte Abdeckprofil (9) von dem Bodenreinigungsgerät (6) befahrbar ist.

7. Leistenanordnung (1) nach Anspruch 6, **dadurch gekennzeichnet, dass** der Ladevorgang des Energiespeichers des Bodenreinigungsgerätes (6) berührend durch Kontakt mit dem zumindest einen Ladekontakt (10), bevorzugt durch Kontakt mit zwei Ladekontakten (10), erfolgt.

8. Leistenanordnung (1) nach einem der Ansprüche 1 bis 5, **dadurch gekennzeichnet, dass** der Ladevorgang des Energiespeichers des Bodenreinigungsgerätes (6) berührungslos mittels kontaktloser Energieübertragung (11) erfolgt, z.B. induktiv.

9. Leistenanordnung (1) nach einem der Ansprüche 1 bis 8, **dadurch gekennzeichnet, dass** die Ladeeinrichtung (5) eine erste Steuereinrichtung aufweist, die mit einer zweiten Steuereinrichtung des Bodenreinigungsgerätes (6) kommunizieren kann.

10. Leistenanordnung (1) nach Anspruch 9, **dadurch gekennzeichnet, dass** die Steuereinrichtung der Ladeeinrichtung (5) ein Positionssignal aussendet, das von der Steuereinrichtung des Bodenreinigungsgerätes (6) verarbeitet wird, z.B. zum positionierten Andocken an die Leiste (2) für den Ladevorgang.

11. Leistenanordnung (1) nach Anspruch 9 oder 10, **dadurch gekennzeichnet, dass** die Steuereinrichtung des Bodenreinigungsgerätes (6) ein Erkennungssignal aussendet, das von der Steuereinrichtung der Ladeeinrichtung (5) verarbeitet wird, z.B. zur Identifizierung des sich nähernden Bodenreinigungsgerätes (6) und/oder zum Aufklappen des Abdeckprofils (9).

12. Leistenanordnung (1) nach einem der Ansprüche 4 bis 11, **dadurch gekennzeichnet, dass** die Leiste (2) einen Antrieb zum Öffnen und/oder Schließen des aufklappbaren Abdeckprofils (9) des Grundkörpers (7) aufweist.

13. Leistenanordnung (1) nach einem der Ansprüche 1 bis 12, **dadurch gekennzeichnet, dass** die Leiste (2) an der oberen Seite des Grundkörpers (7) ein oberes Abschlussprofil (12), z. B. ein Wandabschlussprofil und/oder an der unteren Seite des Grundkörpers ein unteres Abschlussprofil (13), z.B. ein Bodenabschlussprofil, aufweist.

14. Leistenanordnung (1) nach einem der Ansprüche 1 bis 13, **dadurch gekennzeichnet, dass** die Leiste (2), z.B. der Grundkörper (7) und/oder das obere Abschlussprofil (12) und/oder untere Abschlussprofil (13) der Leiste (2) aus zumindest einem thermoplastischen Kunststoff hergestellt ist, z.B. PP, PVC, PS oder andere technische Thermoplaste.

15. Leistenanordnung (1) nach einem der Ansprüche 1 bis 14, **dadurch gekennzeichnet, dass** die Leiste (2), z. B. der Grundkörper (7) und/oder das obere Abschlussprofil (12) und/oder untere Abschlussprofil (13) der Leiste (2) ein Biopolymer umfasst, z.B. Polyactid.

16. Leistenanordnung (1) nach einem der Ansprüche 1 bis 15, **dadurch gekennzeichnet, dass** die Leiste (2), z.B. der Grundkörper (7) und das obere Abschlussprofil (12) und/oder untere Abschlussprofil (13) einstückig durch Extrusion hergestellt ist, vorzugsweise durch Koextrusion.

17. Leistenanordnung (1) nach einem der Ansprüche 1 bis 16, mit der Leiste (2) in oder an welcher die Ladeeinrichtung (5) angeordnet ist, als erste Leiste (2) und mit einer oder mehreren weiteren Leisten ohne Ladeeinrichtung als zweite Leisten, wobei die erste Leiste und die eine oder mehreren weiteren Leisten optisch aneinander angepasst sind, indem sie z.B. mit jeweils einem gleich ausgestalteten Abdeckprofil ausgebildet sind.
